# EUROPEAN PATENT APPLICATION

(11) **EP 4 293 952 A1**
(43) Date of publication of application: **20.12.2023**
(21) Application number: 22179496.9
(22) Date of filing: 17.06.2022
(51) Int. Cl.: H04L 9/06, H04L 9/32, H04L 9/00

(54) **INFORMATION LOOKUP THROUGH ITERATIVE HASHING**

(71) Applicant: Merzoug, Youssef, 3544 AV Utrecht (NL)
(72) Inventor: Merzoug, Youssef, 3544 AV Utrecht (NL)

(57) **Abstract**

In today's data-intensive world, storing data is a major challenge for all industries. Stored data can be accessed fast but need to rest in infrastructures that take space, require protection from intrusions, has to be scalable and highly compatible across usage. Computing data on demand can be cheaper, faster and more scalable using cryptography.

A one-way hash function is a mathematical function that generates a fingerprint of the input, but there is no way to get back to the original input. If the input is the same then the hash is always the same, if it changes at all, even by one character the output hash is completely different. A hash can be itself the input to the same one-way function for computing a second hash. Because the second hash is linked to the first which is linked to the input, the second hash is implicitly linked to the input. The operation can be repeated on the second hash and on the third and so on. We can virtually compute an unlimited number of hashes linked to the same input. The input can be any digital content, for example a big file, a confidential content or a commonly duplicated information. Using those hashes as a proxy to the input can be more convenient than storing the input itself in many situations. Resolving a hash to an input consists of recursively hashing the input, compare the output of each iteration with the given hash, if a match is found then the hash is a valid reference for the input.

## Description

This section includes detailed examples, particular embodiments, and specific terminology. These are not meant to limit the scope. They are intended to provide clear and thorough understanding, cover alternatives, modifications, and equivalents.

Embodiments are provided for recursive hashing. In one embodiment, a digital content of an arbitrary size is hashed using a hash function and the computed hash is hashed iteratively to produce as many hashes as desired. Iterations use an identical or a different hash function which may be selected from a group of hash functions. Iterations can optionally apply an identical or a different reversible transformation to the input before applying the hash function, said transformation may be selected from a user provided set.

A hash function is a cryptographic algorithm that takes an arbitrary amount of data input and produces a fixed-size output of enciphered text called a hash value, or just "hash". Hashing is the process of applying hash function to a data input. It is extremely unlikely that hashing different inputs will result in the same hash. It is also nearly impossible to revert the hash back to the input data.

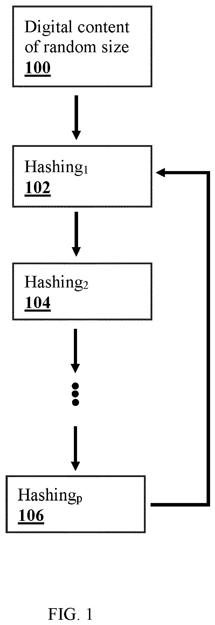

Figures illustrate the embodiments by way of example. They do not limit their scope
FIG. 1 shows a flow diagram of a method of recursive hashing, in accordance with one embodiment. Input data, called digital content of random size 100 , is provided as input to a first hash function 102. The output of the first hash function is provided as input to a second hash function 104. A select number of iterations of applying hash functions are performed, the output of the final hash function 106 is provided as input to the first hash function 102 and the process continues recursively until the desired number of hashes have been computed or a particular hash is found.

The hash functions 102, 104, ... , 106 may be selected from a set of user defined hash functions that may be identical or different. For example, hash functions have different computation rules and produce hashes of different sizes.

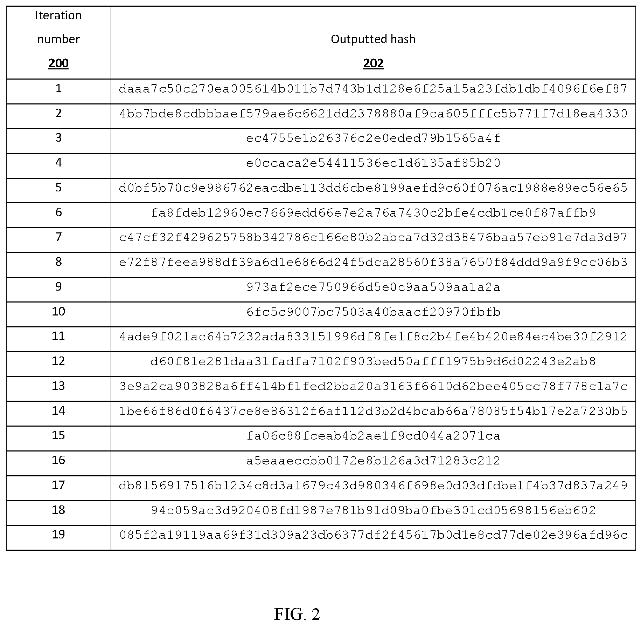

FIG. 2 shows 19 first hashes 200 and iteration number 202 outputted by the following set of hash functions called in this order: blake2s → sha256 → md5 → md4 → sha256 → sha512-224. The initial digital content is the following text: Youssef Merzoug.

The hash functions 102 , 104,..., 106, their mode, their order, the number of iterations and repetitions can be adapted for different applications. For example, when the first hash function is sha256 (secure hash algorithm) and there is no other hash function after it, then the resulting method can run on a bitcoin miner. As of June 2022, the bitcoin network is continuously wasting, on average, 120 000 000 000 000 000 000 000 hashes for a reward of 6.25 bitcoins excluding transactions fees. Diverting some hash power will, by design, lower the bitcoin mining difficulty for same reward, while putting the extra hash power to power applications of this method and making better use of the energy consumed.

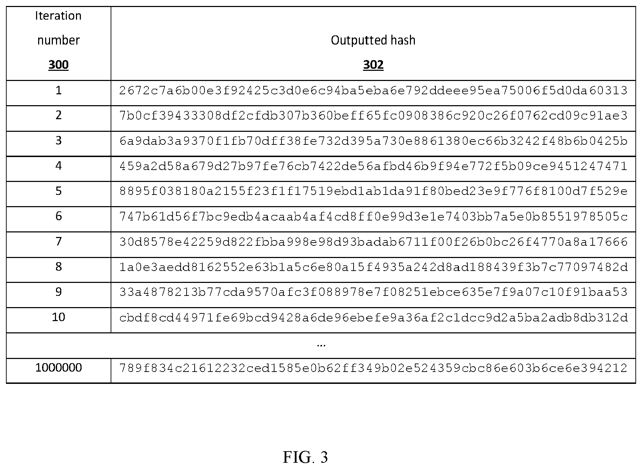

FIG. 3 shows the 10 first and the millionth hashes 300 and iteration number 302 outputted by the following hash function: sha256. The initial digital content is the following text: Youssef Merzoug.

Another application is to use the method to generate and validate proof of work. Given two hashes Hₓ, H_{y} computed by the method. Since it is almost impossible to reverse H_{y}, the only way to find the hash that directly precedes H_{y} is to compute all hashes between Hₓ and H_{y}. Thus, providing a valid value for H_{y-1} is a proof that all hashes between Hₓ and H_{y} have been computed.

The Domain Name System (DNS) is the hierarchical and decentralized naming system used to identify computers reachable through the Internet or other Internet Protocol (IP) networks. Any valid domain name points to one of the 2³² IPs addresses available. The method can be used as a name resolver provided domain names are hashes. Each IP address will be used as input to the method to output as many hashes as domains hosted on that IP address. When a request to resolve a hash to the corresponding IP address, the method is called over every IP address. If a match is found the input IP is returned, if not the domain doesn't exist.

The specific embodiments and specific terminology used above should not be construed as limiting the scope of the embodiments. These details have been presented for purposes of illustration and are not intended to be exhaustive. Many modifications and uses are possible. The scope of the embodiments is defined by the Claims appended hereto and their equivalents.

## Claims

1. A computer-implemented method of recursive hashing comprising:
receiving a digital content of an arbitrary size as input; and
iteratively applying a select hash function from a plurality of hash functions; and
computing a hash from each iteration.

2. The method of claim 1, wherein said hash functions run on different devices

3. The method of claim 1 wherein said input is a memory or at least one file or at least one network connection.

4. The Method of claim 1, further outputting the hash computed in each iteration.

5. The method of claim 1 further comprising at least one target hash wherein the iteration stops when the computed hash is equal to the said target hash; and at least the said digital content, the hash used to compute the target hash or the iteration number is outputted.

6. The Method of claim 1, wherein the number of iterations is selected from a user defined range.

7. The Method of claim 1, wherein said plurality of hash functions is SHA256 (Secure Hash Algorithm 256).

8. The Method of claim 1, wherein said plurality of hash functions contains all or a subset of the following hash functions: BLAKE-256, BLAKE-512, BLAKE2s, BLAKE2b, BLAKE2X, BLAKE3, ECOH, FSB, GOST, Grøstl, HAS-160, HAVAL, JH, LSH, MD2, MD4, MD5, MD6, RadioGatún, RIPEMD, RIPEMD-128, RIPEMD-160, RIPEMD-320, SHA-1, SHA-224, SHA-256, SHA-384, SHA-512, SHA-3, Skein, Snefru, Spectral Hash, Streebog, SWIFFT, Tiger, Whirlpool, Scrypt, LANMAN.

9. The method of claim 1, wherein recursively applying hash functions F_{k%p}; With:
p is a user defined integer greater or equal to 1;
k is the iteration number;
k%p is k modulus p;
F_{k%p} is a hash function from said plurality of hash functions;

10. The method of claim 1 further comprising a user defined plurality of bijective functions wherein a bijective function is applied to the input hash before applying the hash function.

11. The method of claim 1. further including an API (access programming interface) interface; and the method is invoked as an API function.

12. The method of claim 1 further used to sort hashes wherein:
every computed hash is considered higher than all previously computed hashes; or
every computed hash is considered smaller than all previously computed hashes

13. A computer program [product] comprising instructions which, when the program is executed by a computer, cause the computer to carry out the steps of the method of claim 1.

14. A data processing apparatus/device/system comprising means for carrying out the steps of the method of claim 1.

15. A computer-readable [storage] medium comprising instructions which, when executed by a computer, cause the computer to carry out [the steps of] the method of claim 1.
